# EUROPEAN PATENT APPLICATION

(11) **EP 2 196 947 A1**
(43) Date of publication of application: **16.06.2010**
(21) Application number: 08834515.2
(22) Date of filing: 12.08.2008
(51) Int. Cl.: G06K 17/00, H04B 1/59

(54) **RADIO TAG COMMUNICATION DEVICE AND RADIO TAG COMMUNICATION SYSTEM**

(30) Priority: 28.09.2007 JP 2007256081
(71) Applicant: Brother Kogyo Kabushiki Kaisha, Nagoya-shi, Aichi 467-8561 (JP)
(72) Inventor: FUJINO, Hiroaki, Nagoya-shi Aichi 467-8561 (JP); NAGAI, Takuya, Nagoya-shi Aichi 467-8561 (JP); HIRATA, Hironori, Nagoya-shi Aichi 467-8561 (JP)
(74) Representative: Jackson, Martin Peter
(86) International application number: PCT/JP2008/064493
(87) International publication number: WO 2009/041179

(57) **Abstract**

A radio frequency ientification (RFID) tag communicating apparatus that executes communication of information with an RFID tag by transmitting a transmission signal toward the RFID tag and receiving a return signal returned from the RFID tag in response to the transmission signal, includes a communication control portion that selectively establishes a first communication mode of executing communication of information with all RFID tags included in a list that defines a plurality of the RFID tags that are predetermined handling the RFID tags to be communicated or a second communication mode of executing communication of information with at least one of the RFID tags corresponding to a designated piece of identification information handling the RFID tag to be communicated; and a switching determining portion that determines switching between the first communication mode and the second communication mode based on a predetermined parameter and a switching condition determined in advance.

## Description

### BACKGROUND OF THE INVENTION

### 1. Field of the Invention

The present invention relates to a radio frequency identification (RFID) tag communicating apparatus and an RFID tag communication system that execute communication of information by wireless with an RFID tag, and, more particularly, to improvement to check as soon as possible the presence of a plurality of RFID tags listed in advance.

### 2. Description of the Related Art

An RFID (Radio Frequency Identification) system is known, that reads information from a small-size RFID tag (responding apparatus) having predetermined information stored therein in a non-contact manner using a predetermined RFID tag communicating apparatus (questioning apparatus). This RFID system is capable of reading information stored in an RFID tag by communicating with the RFID tag communicating apparatus even when the RFID tag is stained or disposed at a position at which the RFID tag is invisible. Therefore, application of the RFID system is expected in various fields such as management and inspection processes of merchandise.

A system has been proposed that checks the presence of a plurality of RFID tags listed in advance as a form of the RFID tag communication system that uses such an RFID tag communicating apparatus. Such a system is, for example, a presence check system described in Patent Document 1. Preferably, such a technique is used in taking an inventory of merchandise in a store, etc. For example, an RFID tag is attached on each of a plurality of articles (merchandise) to be managed, and the correspondence relations between the plurality of articles and the IDs of RFID tags are listed. Communication with the RFID tags pasted on the articles is executed by the RFID tag communicating apparatus. Thereby, the articles present in the store are able to be easily and quickly checked.

Patent Document 1: JP 2004-93423 A

However, in the above-indicated conventional technique, though the number of the articles, that is, the RFID tags whose presence is not checked decreases as the communication for the checking by the RFID tag communicating apparatus advances, the RFID tags as objects to be communicated with does not decrease. Therefore, adverse effects have arisen that unreasonable time is necessary to check all the articles, that the power consumption of the RFID tag communicating apparatus becomes wastefully tremendous, and that, therefore, the battery is quickly consumed especially when the RFID tag communicating apparatus is a portable-type apparatus. Under such a situation, it has been sought the technique capable of possibly and quickly checking presence of a plurality of the RFID tags previously listed.

### SUMMARY OF THE INVENTION

The present invention was conceived in view of the above-indicated circumstances and the object thereof is to provide an RFID tag communicating apparatus and an RFID tag communication system that are capable of checking as soon as possible the presence of a plurality of RFID tags listed in advance.

The object indicated above is achieved in the first mode of the present invention, which provides an RFID tag communicating apparatus that executes communication of information with an RFID tag by transmitting a transmission signal toward the RFID tag and receiving a return signal returned from the RFID tag in response to the transmission signal, including: a communication control portion that selectively establishes a first communication mode of executing communication of information with all RFID tags included in a list that defines a plurality of the RFID tags that are predetermined handling the RFID tags to be communicated or a second communication mode of executing communication of information with at least one of the RFID tags corresponding to a designated piece of identification information handling the RFID tag to be communicated; and a switching determining portion that determines switching between the first communication mode and the second communication mode based on a predetermined parameter and a switching condition determined in advance.

The object indicated above is achieved in the second mode of the present invention, which provides an RFID tag communication system including: the RFID tag communicating apparatus of the first mode of the invention; and a server apparatus having the list stored therein that is capable of executing communication of information with the RFID tag communicating apparatus, wherein the RFID tag communicating apparatus executes communication to check presence of the plurality of RFID tags included in the list.

According to the first mode of the invention, the RFID tag communicating apparatus includes a communication control portion that selectively establishes a first communication mode of executing communication of information with all RFID tags included in a list that defines a plurality of the RFID tags that are predetermined handling the RFID tags to be communicated or a second communication mode of executing communication of information with at least one of the RFID tags corresponding to a designated piece of identification information handling the RFID tag to be communicated; and a switching determining portion that determines switching between the first communication mode and the second communication mode based on a predetermined parameter and a switching condition determined in advance. Therefore, the communication to check the presence of the plurality of RFID tags listed in advance may be switched to the communication executed designating identification information corresponding to the advancement of the checking, so that the communication may efficiently be executed with unchecked RFID tags. It thus becomes possible to provide an RFID tag communicating apparatus that may check as soon as possible the presence of the plurality of RFID tags listed in advance.

In the first mode of the invention, preferably, the switching determining portion is capable of selecting a switching condition and a parameter corresponding to a switching condition that is criterion for determining switching between the communication modes, from a plurality of switching conditions determined in advance. By configuring as above, the switching between the first communication mode and the second communication mode may be determined such that more efficient communication may be executed with unchecked RFID tags by selectively using the plurality of criteria.

Preferably, the parameter is the number of undetected RFID tags of the RFID tags included in the list, and wherein the switching condition for switching from the first communication mode to the second communication mode is that the number of undetected RFID tags of the RFID tags included in the list is smaller than a predetermined threshold value. By configuring as above, the switching between the first communication mode and the second communication mode may be determined based on the practical condition and the parameter.

Preferably, the parameter is elapsed time from the start of the communication with the RFID tags, and wherein the switching condition for switching from the first communication mode to the second communication mode is that the elapsed time from the start of the communication with the RFID tags is equal to or longer than a predetermined threshold value. By configuring as above, the switching between the first communication mode and the second communication mode may be determined based on the practical condition and the parameter.

Preferably, the parameter is the total number of communication sessions with the RFID tags, and wherein the switching condition for switching from the first communication mode to the second communication mode is that the total number of communication sessions with the RFID tags is equal to or larger than a predetermined threshold value. By configuring as above, the switching between the first communication mode and the second communication mode may be determined based on the practical condition and the parameter.

Preferably, the parameter is the number of RFID tags whose identification information pieces are readable with a predetermined command used one time in the communication with the RFID tags, and wherein the switching condition for switching from the first communication mode to the second communication mode is that the number of RFID tags whose identification information pieces are readable with a predetermined command used one time in the communication with the RFID tags is smaller than a predetermined threshold value. In the above, the predetermined command refers to a "Query" command in, for example, a C1G2 (Class 1 Generation 2) protocol that is standardized in EPCglobal. By configuring as above, the switching between the first communication mode and the second communication mode may be determined based on the practical condition and the parameter.

Preferably, the RFID tag communicating apparatus further including a communication state determining portion that determines a state of the communication with the RFID tags, wherein the switching determining portion varies a threshold value in the switching condition corresponding to a state of the communication determined by the communication state determining portion. By configuring as above, the switching between the first communication mode and the second communication mode may be determined such that more efficient communication may be executed with unchecked RFID tags by setting the threshold value corresponding to the state of the communication.

Preferably, the switching determining portion varies a threshold value for the number of undetected RFID tags of the RFID tags included in the list corresponding to the state of the communication determined by the communication state determining portion. By configuring as above, the switching between the first communication mode and the second communication mode may advantageously be determined by properly setting the threshold value under the practical switching condition.

Preferably, the switching determining portion varies the threshold value for the elapsed time from the start of the communication with the RFID tags corresponding to the state of the communication determined by the communication state determining portion. By configuring as above, the switching between the first communication mode and the second communication mode may advantageously be determined by properly setting the threshold value under the practical switching condition.

Preferably, the switching determining portion varies the threshold value for the total number of communication sessions with the RFID tags corresponding to the state of the communication determined by the communication state determining portion. By configuring as above, the switching between the first communication mode and the second communication mode may advantageously be determined by properly setting the threshold value under the practical switching condition.

Preferably, the switching determining portion varies the threshold value for the number of RFID tags whose identification information pieces are readable with a predetermined command used one time in the communication with the RFID tags corresponding to the state of the communication determined by the communication state determining portion. By configuring as above, the switching between the first communication mode and the second communication mode may advantageously be determined by properly setting the threshold value under the practical switching condition.

Preferably, the communication state determining portion determines the state of the communication with the RFID tags based on magnitude of disturbance in the communication with the RFID tag. By configuring as above, the state of the communication with the RFID tags may be determined in a practical form.

Preferably, the communication state determining portion determines the state of the communication with the RFID tags based on a read error rate in the communication with the RFID tags. By configuring as above, the state of the communication with the RFID tags may be determined in a practical form.

Preferably, the communication state determining portion determines the state of the communication with the RFID tags based on the number of communication-successful slots, the number of empty slots, or the number of collision slots obtained in reading executed in the communication with the RFID tags. By configuring as above, the state of the communication with the RFID tags may be determined in a practical form.

Preferably, the RFID tag communicating apparatus is a portable type apparatus movably provided relative to a predetermined position. By configuring as above, for the portable-type RFID tag communicating apparatus that is preferably used in the communication to check the presence of the plurality of RFID tags listed in advance, the communication to check as soon as possible the presence of the plurality of RFID tags may be realized.

Preferably, the RFID tag communicating apparatus further including a built-in-type storing apparatus having the list stored therein. By configuring as above, communication to check the presence of the plurality of RFID tags included in the list may be executed in a practical form.

According to the second mode of the invention, an RFID tag communication system including the RFID tag communicating apparatus of the first mode of the invention; and a server apparatus having the list stored therein that is capable of executing communication of information with the RFID tag communicating apparatus, wherein the RFID tag communicating apparatus executes communication to check presence of the plurality of RFID tags included in the list. Therefore, the communication to check the presence of the plurality of RFID tags listed in advance may be switched to the communication executed designating identification information corresponding to the advancement of the checking, so that the communication may efficiently be executed with unchecked RFID tags. It thus become possible the RFID tag communication system that may check as soon as possible the presence of the plurality of RFID tags listed in advance.

### BRIEF DESCRIPTION OF THE DRAWINGS

Fig. 1 is an explanatory diagram of an RFID tag communication system to which the present invention is preferably applied;
Fig. 2 is a perspective view of the appearance of an RFID tag communicating apparatus that is an embodiment of the present invention;
Fig. 3 is an explanatory diagram of the configuration of the RFID tag communicating apparatus depicted in Fig. 2;
Fig. 4 is a diagram of an exemplary RFID tag list stored in a memory portion of the RFID tag communicating apparatus depicted in Fig. 2;
Fig. 5 is an explanatory diagram of the state where an RFID tag pasted on an article stored in a storage shed is searched for by the RFID tag communicating apparatus depicted in Fig. 2 in the RFID tag communication system depicted in Fig. 1;
Fig. 6 is an explanatory diagram of the configuration of an RFID tag circuit element included in an RFID tag to be managed by the RFID tag communication system depicted in Fig. 1;
Fig. 7 is an explanatory flowchart of the purview of the control of the communication of the RFID tag by a DSP of the RFID tag communicating apparatus depicted in Fig. 3;
Fig. 8 is an explanatory diagram of an RFID tag communication system that is an embodiment of a present second invention; and
Fig. 9 is a diagram of an exemplary configuration of a server apparatus included in the RFID tag communication system depicted in Fig. 8.

### EXPLANATIONS OF LETTERS OR NUMERALS

10, 100: RFID tag communication system, 12: RFID tag communicating apparatus, 14: RFID tag, 16: communicating portion, 18: displaying portion, 20: operating portion, 22: transmitting and receiving antenna, 30: search button, 32: move button, 34: DSP, 36: transmission memory portion, 38: transmission signal D/A converting portion, 40: local oscillator, 42: up-converter, 44: transmission signal amplifying portion, 46: reception signal amplifying portion, 48: transmission and reception separating portion, 50: down-converter, 52: reception signal A/D converting portion, 54: reception memory portion, 56: command bit string creating portion, 58: encoding portion, 60: modulating portion, 62: demodulating portion, 64: decoding portion, 66: response bit string interpreting portion, 68: display control portion, 70: communication state determining portion, 71: switching determining portion, 72: communication control portion, 74: wireless LAN communicating portion, 76: memory portion (storing apparatus), 78: storage shed, 80: article, 82: RFID tag circuit element, 84: antenna portion, 86: IC circuit portion, 88: rectifying portion, 90: power portion, 92: clock extracting portion, 94: memory portion, 96: modulating and demodulating portion, 98: control portion, 102: server apparatus, 104: CPU, 106: ROM, 108: RAM, 110: video image displaying apparatus, 112: video board, 114: input apparatus, 116: input interface, 118: wireless communicating portion, 120: storing apparatus

### DETAILED DESCRIPTION OF THE PREFERRED EMBODIMENTS

Preferred embodiments of the present invention will now be described in detail with reference to the accompanying drawings.

### EMBODIMENT

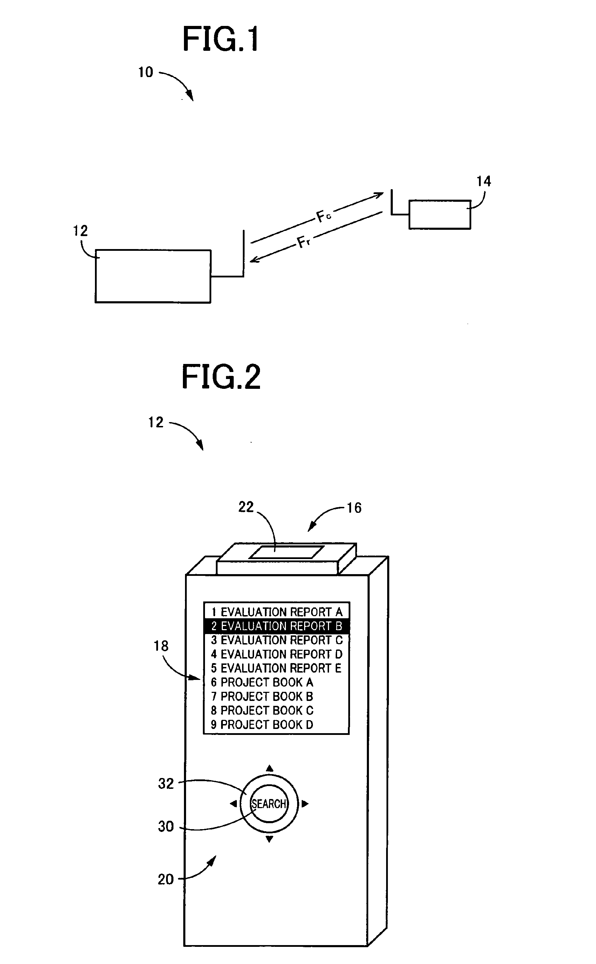

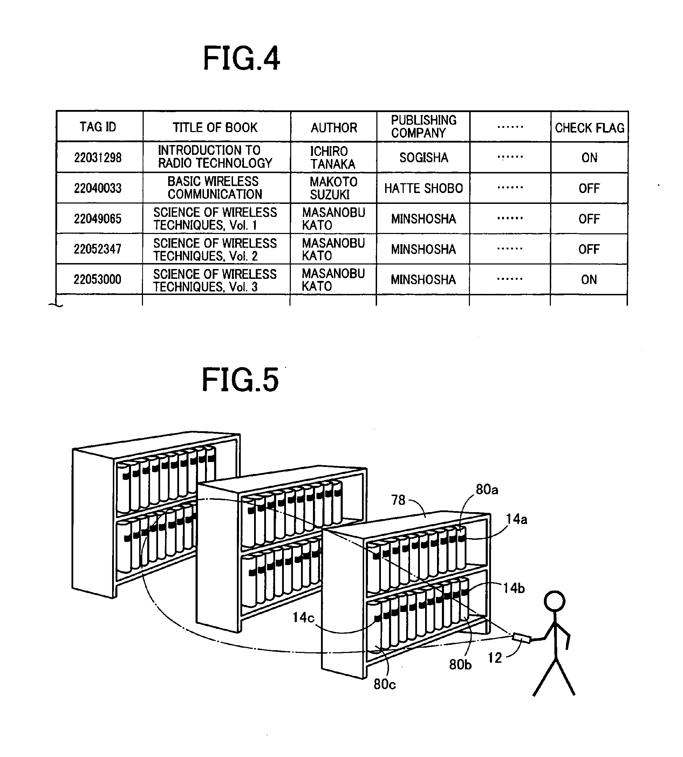

The RFID tag communication system 10 is a so-called RFID (Radio Frequency Identification) system including an RFID tag communicating apparatus 12 that is an embodiment of a present first invention, and one or a plurality of ("one" in Fig. 1) RFID tag (s) 14 that is (are) a communication counterpart (s) of the RFID tag communicating apparatus 12. The above-indicated RFID tag communicating apparatus 12 functions as a questioning apparatus of the RFID system and the above-indicated RFID tag 14 functions as a responding apparatus of the RFID system. When a question wave F_{c} (transmission signal) is transmitted from the above-indicated RFID tag communicating apparatus 12 toward the above-indicated RFID tag 14, the above-indicated RFID tag 14 that receives the question wave F_{c} modulates the question wave F_{c} using a predetermined information signal (data), and returns the modulated wave toward the above-indicated RFID tag communicating apparatus 12 as a response wave Fᵣ (response signal). Thereby, communication of information is executed between the RFID tag communicating apparatus 12 and the RFID tag 14. Preferably, the RFID tag communication system 10 is used for management, etc., of articles 80 in a predetermined communication area as described later with reference to Fig. 5, etc. The above-indicated RFID tag 14 is provided being integrated with each of the articles 80 by being pasted, etc., on each of the articles 80 to be managed.

As depicted in Fig. 2, the RFID tag communicating apparatus 12 of the embodiment includes a communicating portion 16 to execute communication of information mainly with the above-indicated RFID tag 14, a displaying portion 18 to display a predetermined video image (image) concerning the above-indicated communication, and an operating portion 20 to execute various operations concerning the above-indicated communication. Preferably, the RFID tag communicating apparatus 12 is a portable apparatus, that is, a handy scanner movably provided relative to a predetermined position such as, for example, a room (or its floor), etc., to which the above-indicated RFID tag communication system is applied and is adapted to be used by a user by being carried by the user when the user searches for the above-indicated RFID tag 14, etc.

The above-indicated communicating portion 16 includes a transmitting and receiving antenna 22 to transmit the transmission signal toward the RFID tag 14 and receive the response signal returned from the RFID tag 14 in response to the transmission signal. Preferably, for example, a linearly polarized wave flat panel antenna or a circularly polarized wave flat panel antenna configured by patch antennas, etc., is used as the transmitting and receiving antenna 22. The above-indicated displaying portion 18 is a displaying apparatus such as a liquid crystal display, etc., and displays various video images concerning the communication with the RFID tag 14 such as, for example, a list that is read from a memory portion 76 described later of RFID tags 14 that may be searched for, as depicted in Fig. 2, or a video image indicating that the RFID tag 14 to be searched for has been detected. The above-indicated operating portion 20 includes a search button 30 to cause the search for the RFID tag 14 to be executed and move buttons 32 for upward, downward, rightward, and leftward directions to execute operations such as moving a cursor displayed on the above-indicated displaying portion 18. For example, the RFID tag communication apparatus 12 continuously searches for the RFID tag 14 while the search button 30 is being pressed down.

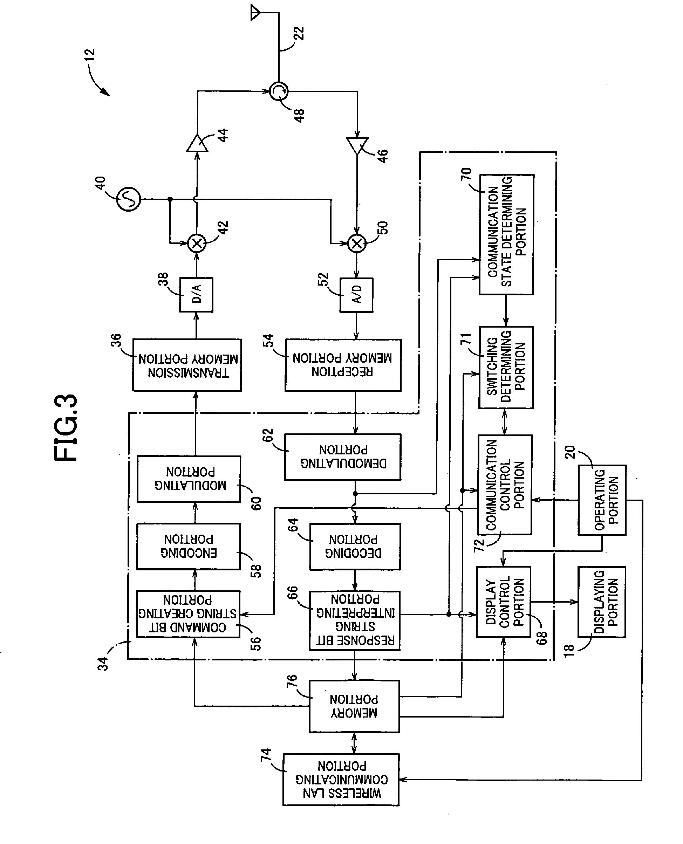

As depicted in Fig. 3, the above-indicated RFID tag communicating apparatus 12 executes the communication of information with the above-indicated RFID tag 14 to execute reading of information for the RFID tag 14, search of the RFID tag 14, etc., and the RFID tag communicating apparatus 12 includes: a DSP (Digital Signal Processor) 34 that executes digital signal processes such as outputting a transmission signal as a digital signal and demodulating a return signal from the above-indicated RFID tag 14; a transmission memory portion 36 that has stored therein a transmission signal output from the DSP 34; a transmission signal D/A converting portion 38 that converts a transmission signal read from the transmission memory portion 36 into an analog signal; a local oscillator 40 that generates a local signal at a predetermined frequency; an up-converter 42 that increases the frequency of a transmission signal converted into an analog signal by the above-indicated transmission signal D/A converting portion 38, by the frequency of the local signal output from the local oscillator 40; a transmission signal amplifying portion 44 that amplifies a transmission signal output from the up-converter 42 at a predetermined amplification factor; a reception signal amplifying portion 46 that amplifies at a predetermined amplification factor a reception signal received by the transmitting and receiving antenna 22; a transmission and reception separating portion 48 that supplies a transmission signal amplified by the above-indicated transmission signal amplifying portion 44 to the transmitting and receiving antenna 22 and that supplies a reception signal received by the transmitting and receiving antenna 22 to the above-indicated reception signal amplifying portion 46; a down-converter 50 that decreases the frequency of a reception signal amplified by the above-indicated reception signal amplifying portion 46, by the frequency of a local signal output from the above-indicated local oscillator 40; a reception signal A/D converting portion 52 that converts a reception signal output from the down-converter 50 into a digital signal; and a reception memory portion 54 that has stored therein a reception signal converted into a digital signal by the reception signal A/D converting portion 52 and from which the reception signal is readable by the above-indicated DSP 34. In this case, preferably, an apparatus such as a circulator or a directional coupler is used as the above-indicated transmission and reception separating portion 48.

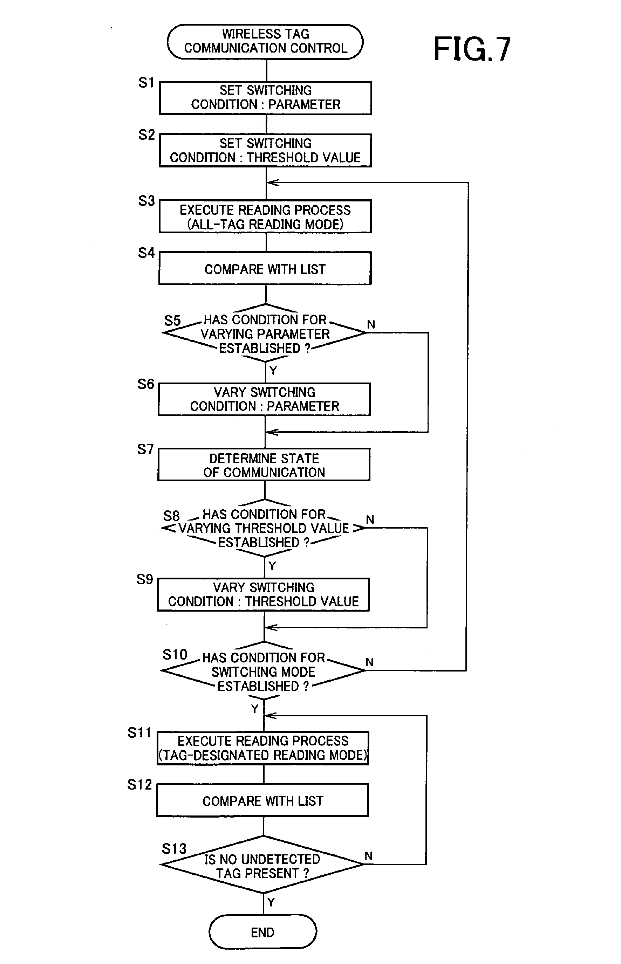

The DSP 34 is a so-called micro computer system that includes a CPU that is a central processing portion, a ROM that is a read-only memory, a RAM that is a random access memory, etc., and executes signal processing according to a program stored in advance in the ROM using a temporary storage function of the RAM. The DSP 34 functionally includes a command bit string creating portion 56 that creates a command bit string corresponding to a transmission signal to the RFID tag 14, an encoding portion 58 that encodes a digital signal output from the command bit string creating portion 56, a modulating portion 60 that modulates a signal encoded by the encoding portion 58 and that supplies the modulated signal to the above-indicated transmission memory portion 36, a demodulating portion 62 that demodulates a reception signal read from the above-indicated reception memory portion 54 and that detects a demodulated wave, a decoding portion 64 that decodes a demodulated wave demodulated by the demodulating portion 62, a response bit string interpreting portion 66 that interprets a decoded signal decoded by the decoding portion 64 and that reads from the decoded signal an information signal concerning modulation of the RFID tag 14, a display control portion 68 that controls display by the displaying portion 18 such as causing the displaying portion 18 to display a predetermined video image corresponding to the information signal read by the response bit string interpreting portion 66, a communication state determining portion 70 that determines the state of communication with the RFID tag 14, a switching determining portion 71 that determines switching of modes of the communication with the RFID tag 14 according to the determination result by the communication state determining portion 70, etc., and a communication control portion 72 that controls wireless communication with the RFID tag 14 to be communicated through the above-indicated command bit string creating portion 56, etc. The RFID tag communicating apparatus 12 includes a wireless LAN communicating portion 74 to execute transmission and reception of information by wireless LAN communication with a database server, etc., and a memory portion 76 that has stored therein various pieces of information concerning the communication with the above-indicated RFID tag 14 such as information received by the wireless LAN communicating portion 74, an information signal read by the above-indicated response bit string interpreting portion 66, etc. Operation of each of the above-indicated communication state determining portion 70, the switching determining portion 71, and the communication control portion 72 will be described later with reference to Fig. 7, etc. The above-indicated wireless LAN communicating portion 74 may not be provided in an aspect that needs no communication with a server apparatus 102 described later.

As depicted in Fig. 5, in the RFID tag communication system 10 of the embodiment, for example, RFID tags 14a, 14b, 14c,... are respectively pasted on articles 80a, 80b, 80c,... that are books, etc., to be managed (hereinafter, when each of them is not distinguished, simply "articles 80"). The positions at which the articles 80 corresponding to the RFID tags 14 are stored are detected by searching for those RFID tags 14 and, thereby, management of the articles 80 such as an inventory of the articles 80 may be executed. In this case, for each of the RFID tags 14, a predetermined ID (for example, an eight-digit number) is stored in a memory portion 94 described later and each of the RFID tags 14 is identifiable by the ID. As depicted in Fig. 4, the memory portion 76 of the RFID tag communicating apparatus 12 has stored therein the IDs of the plurality of RFID tags 14 to be managed in the RFID tag communication system 10 correlating the IDs with information on the articles 80 that are pasted with the RFID tags 14. The memory portion 76 has stored therein, concerning all the RFID tags 14 to be managed in the RFID tag communication system 10, pieces of information such as, for example, the name of a book, the name of the author, the name of the publishing company, etc., as the items to be managed for each of the RFID tags 14 as a definition list. The memory portion 76 also has stored therein check flags ON or OFF that each indicate whether each of the RFID tags 14 is detected or not, correlating the check flags with the IDs of the RFID tags 14. In other words, for all the RFID tags 14 included in the RFID tag communication system 10, indication of whether each of the RFID tags 14 is detected by the RFID tag communicating apparatus 12 (whether the RFID tag 14 is already detected or not detected) is stored in an RFID tag list of the memory portion 76 as a storing apparatus included in the RFID tag communicating apparatus 12.

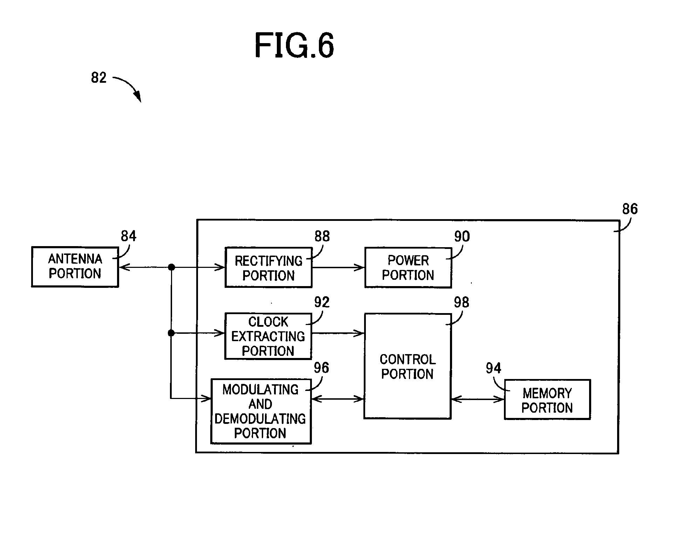

As depicted in Fig. 6, the RFID tag circuit element 82 includes an antenna portion 84 that executes transmission and reception of a signal to/from the RFID tag communicating apparatus 12, and an IC circuit portion 86 that processes a signal received by the antenna portion 84. The IC circuit portion 86 functionally includes a rectifying portion 88 that rectifies the question wave F_{c} from the RFID tag communicating apparatus 12 received by the above-indicated antenna portion 84, a power portion 90 to accumulate the energy of the question wave F_{c} rectified by the rectifying portion 88, a clock extracting portion 92 that extracts a clock signal from a carrier wave received by the above-indicated antenna portion 84 and that supplies the clock signal to a control portion 98, a memory portion 94 that functions as an information storing portion that is capable of having stored therein a predetermined information signal, a modulating and demodulating portion 96 that is connected to the above-indicated antenna portion 84 and that modulates and demodulates a signal, and the control portion 98 that controls operation of the above-indicated RFID tag circuit element 82 through the above-indicated rectifying portion 88, the clock extracting portion 92, and the modulating, demodulating portion 96, etc. The control portion 98 executes basic control such as control of causing the above-indicated memory portion 94 to have the above-indicated predetermined information stored therein by executing the communication with the RFID tag communicating apparatus 12 or control of causing the above-indicated modulating and demodulating portion 96 to modulate the question wave F_{c} received by the above-indicated antenna portion 84 based on the information signal stored in the above-indicated memory portion 94 and causing the modulated wave to be reflectingly returned from the above-indicated antenna portion 84 as the response wave Fᵣ.

Referring back to Fig. 3, the communication state determining portion 70 determines the state of the communication by the RFID tag communicating apparatus 12 with the RFID tag 14. Preferably, the communication state determining portion 70 determines the state of the communication with the RFID tag 14 based on the magnitude of disturbance in the communication with the RFID tag 14. The communication state determining portion 70 determines the state of the communication with the RFID tag 14 concerning the communication based on the magnitude of noises included in a reception signal received by the transmitting and receiving antenna 22. In this case, the magnitude of the disturbance in the communication with the RFID tag 14 refers to the magnitude of external noises during the communication. More specifically, the communication state determining portion 70 detects the magnitude of such disturbance by detecting the signal strength of a signal received when receiving circuits, that is, the demodulating portion 62, etc., are operated (the signal output from the demodulating portion 62) before the communication (transmission of a command, etc.) with the RFID tag 14 is executed.

Preferably, the communication state determining portion 70 determines the state of the communication with the RFID tag 14 based on the read error rate in the communication with the RFID tag 14. For example, the communication state determining portion 70 detects the bit error rate of the communication with the RFID tag 14 and determines the state of the communication with the RFID tag 14 base on the bit error rate. In other words, the communication state determining portion 70 detects the rate (ratio) of bits constituting a code that are not correctly read by the response bit string interpreting portion 66. The communication state determining portion 70 may also determine the state of the communication with the RFID tag 14 based on the frame error rate of the communication with the RFID tag 14.

Preferably, the communication state determining portion 70 determines the state of the communication with the RFID tag 14 based on the number of communication-successful slots, the number of empty slots, or the number of collision slots obtained in reading in the communication with the RFID tag 14. When a response signal is received from a predetermined RFID tag 14 in each one communication portion time period (slot) during the communication with this RFID tag 14, the communication state determining portion 70 determines the state of the communication based on any one (or their compound result) of the number of slots for each of which reception of a response signal is successful, the number of slots for each of which no response signal is detected, and the number of slots for each of which response signals (reflected waves) corresponding different pieces of identification information are simultaneously received (the number of collision slots).

Based on the result of the determination by the switching determining portion 71, the communication control portion 72 selectively establishes a first communication mode of executing communication of information with all the RFID tags 14 that are included in the list stored in the memory portion 76 handling these RFID tags 14 to be communicated, or a second communication mode of executing communication of information with at least one of these RFID tags 14 that corresponds to a designated piece of identification information (ID) handling such RFID tag 14 to be communicated. According to the result of the determination by the switching determining portion 71, the communication control portion 72 selectively establishes an all-tag reading mode according to a "Get All ID" command that causes detection of all the RFID tags 14 to be executed without any ID designated or a tag-designated reading mode according to a "Get This ID" command that causes detection of the RFID tag(s) 14 to be executed with an ID designated. More specifically, in the above-indicated first communication mode, the command bit string creating portion 56 creates a command bit string for the "Get All ID" command and communication according to the command bit string is executed while, in the above-indicated second communication mode, the command bit string creating portion 56 creates a command bit string for the "Get This ID" command with a designated ID of an undetected RFID tag 14 (whose check flag is OFF) of the RFID tags 14 included in the list stored in the memory portion 76 and communication according to the command bit string is executed.

The switching determining portion 71 determines switching between the first communication mode and the second communication mode in the communication control portion 72 based on a predetermined parameter and a predetermined switching condition. Preferably, the switching determining portion 71 is capable of selecting a switching condition and a corresponding parameter that are the criteria of the determination of the switching of the communication modes from a plurality of predetermined switching conditions stored in the memory portion 76, etc., and the switching determining portion 71 determines the switching of the communication modes based on the corresponding parameter and the switching condition selected as above. The plurality of switching conditions and corresponding parameters that are the criteria of the determination of the switching by the switching determining portion 71 will be described below.

Preferably, the switching determining portion 71 determines the switching of the communication modes using the number of undetected RFID tags 14 of the RFID tags 14 included in the list, as the parameter. In this aspect, the switching condition that is the criterion of the determination of the switching is, for example, that the number of undetected RFID tags 14, that is, the RFID tags 14 whose check flags are OFF of the RFID tags 14 included in the list is smaller than a predetermined threshold value (for example, three). In the case where the RFID tag communicating apparatus 12 detects all the RFID tags 14 included in the list, when the number of undetected RFID tags 14 is relatively large, the detection may be more efficiently executed using the communication executed in the first communication mode (all-tag reading mode) of executing communication of information with all the RFID tags 14 that are included in the list handling these RFID tags 14 to be communicated. However, when the number of undetected RFID tags 14 becomes relatively small, the detection may be more efficiently executed using the communication executed in the second communication mode (tag-designated reading mode) of executing the detection designating the IDs of the undetected RFID tags 14. In this case, preferably, the number of undetected RFID tags 14 as the threshold value is determined based on the data experimentally obtained in advance, etc., such that the efficiency of the detection of the RFID tags 14 by the RFID tag communicating apparatus 12 is improved as highly as possible.

Preferably, the switching determining portion 71 determines the switching of the communication modes using the time elapsed from the start of the communication with the RFID tags 14 (total reading time), as the parameter. In this aspect, the switching condition that is the criterion of the determination of the switching is, for example, that the time elapsed from the start of the communication with the RFID tags 14 becomes equal to or longer than a predetermined threshold value (for example, one minute). In the case where the RFID tag communicating apparatus 12 detects all the RFID tags 14 included in the list, when the elapsed time from the start of the communication with the RFID tags 14 is relatively short, the detection may be more efficiently executed using the communication executed in the first communication mode (all-tag reading mode) of executing communication of information with all the RFID tags 14 that are included in the list handling these RFID tags 14 to be communicated. However, when the elapsed time becomes relatively long, the detection may be more efficiently executed using the communication executed in the second communication mode (tag-designated reading mode) of executing the detection designating the IDs of the undetected RFID tags 14. In this case, preferably, the elapsed time as the threshold value is determined based on the data experimentally obtained in advance, etc., such that the efficiency of the detection of the RFID tags 14 by the RFID tag communicating apparatus 12 is improved as highly as possible.

Preferably, the switching determining portion 71 determines the switching of the communication modes using the total number of communication sessions with the RFID tags 14, as the parameter. In this aspect, the switching condition that is the criterion of the determination of the switching is, for example, that the total number of communication sessions with the RFID tags 14 becomes equal to or larger than a predetermined threshold value (10). In the case where the RFID tag communicating apparatus 12 detects all the RFID tags 14 included in the list, when the total number of communication sessions with the RFID tags 14 is relatively small, the detection may be more efficiently executed using the communication executed in the first communication mode (all-tag reading mode) of executing communication of information with all the RFID tags 14 that are included in the list handling these RFID tags 14 to be communicated. However, when the total number of communication sessions becomes relatively large, the detection may be more efficiently executed using the communication executed in the tag second communication mode (tag-designated reading mode) of executing the detection designating the IDs of the undetected RFID tags 14. In this case, preferably, the total number of communication sessions as the threshold value is determined based on the data experimentally obtained in advance, etc., such that the efficiency of the detection of the RFID tags 14 by the RFID tag communicating apparatus 12 is improved as highly as possible.

Preferably, the switching determining portion 71 determines the switching of the communication modes using the number of RFID tags 14 whose IDs (identifying information pieces) are readable with a predetermined command used one time in the communication with the RFID tags 14, as the parameter. In this case, the predetermined command refers to, for example, a "Query" command for the case of the protocol of C1G2 (Class 1 Generation 2) that is standardized in EPCglobal. In this aspect, the switching condition that is the criterion of the determination of the switching is, for example, that the number of RFID tags 14 whose IDs are readable with a predetermined command used one time in the communication with the RFID tags 14 is smaller than a predetermined threshold value (for example, five). In the case where the RFID tag communicating apparatus 12 executes detection of all the RFID tags 14 included in the list, when the number of RFID tags 14 whose IDs are readable in communication corresponding to the "Query" command used one time is relatively large, the detection may be more efficiently executed using the communication executed in the first communication mode (all-tag reading mode) of executing communication of information with all the RFID tags 14 that are included in the list handling these RFID tags 14 to be communicated. However, when the number of such RFID tags 14 becomes relatively small, the detection may be more efficiently executed using the communication executed in the second communication mode (tag-designated reading mode) of executing the detection designating the IDs of the undetected RFID tags 14. In this case, preferably, the number of such RFID tags 14 as the threshold value is determined based on the data experimentally obtained in advance, etc., such that the efficiency of the detection of the RFID tags 14 by the RFID tag communicating apparatus 12 is improved as highly as possible.

The switching determining portion 71 varies the threshold value that is the criterion of the determination of the switching of the communication modes corresponding to the state of the communication determined by the communication state determining portion 70. In the aspect where the number of undetected RFID tags 14 of the RFID tags 14 included in the list is used as the parameter, the switching determining portion 71 varies the threshold value for the number of undetected RFID tags of the RFID tags 14 included in the list corresponding to the state of the communication determined by the communication state determining portion 70. In the aspect where the elapsed time from the start of the communication with the RFID tags 14 (the total reading time) is used as the parameter, the switching determining portion 71 varies the threshold value for the elapsed time from the start of the communication with the RFID tags 14 corresponding to the state of the communication determined by the communication state determining portion 70. In the aspect where the total number of communication sessions with the RFID tags 14 is used as the parameter, the switching determining portion 71 varies the threshold value for the total number of communication sessions with the RFID tags 14 corresponding to the state of the communication determined by the communication state determining portion 70. In the aspect where the number of RFID tags 14 whose IDs (identification information pieces) are readable with a predetermined command used one time in the communication with the RFID tags 14 is used as the parameter, the switching determining portion 71 varies the threshold value for the number of RFID tags 14 whose identification information pieces are readable with the predetermined command used one time in the communication with the RFID tags 14 corresponding to the state of the communication determined by the communication state determining portion 70. In these cases, preferably, the relation to determine an increase or a decrease of each threshold corresponding to the state of the communication determined by the communication state determining portion 70 is determined based on the data experimentally obtained in advance, etc., such that the efficiency of the detection of the RFID tags 14 by the RFID tag communicating apparatus 12 is improved as highly as possible, and the relation is stored in the memory portion 76. The switching determining portion 71 increases or decreases the threshold value for the corresponding parameter based on the state of the communication determined by the communication state determining portion 70 from the relation determined in advance as above.

In Fig. 7 the flow is repeatedly executed in predetermined cycles.

At step S1 (hereinafter, "step" is omitted), a switching condition and a corresponding parameter that are the criteria for determining the switching of the communication modes are set automatically or in response to operation by the operating portion 20. At S2, a threshold value that is the criterion for determining the switching is set corresponding to the switching condition and the parameter set at S1. At S3, the all-tag reading mode (first communication mode) of executing the detection of all the RFID tags 14 without designating any ID is established and a communication process corresponding to the "Get All ID" command is executed through the command bit string creating portion 56, etc. At S4, the each ID of an RFID tag 14 obtained as the result of the communication at S3 is compared with the list stored in the memory portion 76 and the check flag corresponding to the ID is set to be ON.

At S5, whether the condition to change the switching condition and the parameter that are criteria for determining the switching of the communication modes is established is determined. When this determination at S5 is denied, processes at S7 and later steps are executed. However, when this determination at S5 is acknowledged, the switching condition and the parameter that are the criteria for determining the switching of the communication modes are changed at S6 and, thereafter, the state of the communication with the RFID tags 14 by the RFID tag communicating apparatus 12 is determined at S7 that corresponds to the operation of the communication state determining portion 70. At S8, whether the condition to vary the threshold value that is the criterion for determining the switching of the communication modes is established is determined. When the determination at S8 is denied, processes at S10 and later steps are executed. However, when this determination at S8 is acknowledged, the threshold value that is the criterion for determining the switching of the communication modes is varied at S9 based on the state of the communication determined at S7.

At S10 that corresponds to the operation of the switching determining portion 71, whether the condition to switch the communication mode is established is determined based on the corresponding parameter and the switching condition set at S1 or S6 and the threshold value set at S2 or S9. When this determination at S10 is denied, the processes at S3 and the later steps are again executed. However, the determination at S10 is acknowledged, the tag-designated reading mode (second communication mode) executing detection of the RFID tags 14 designating an ID is established at S11 and a communication process corresponding to the "Get This ID" command is executed through the command bit string creating portion 56, etc. At S12, the each ID of the RFID tag 14 obtained as the result of the communication at S11 is compared with the list stored in the memory portion 76 and the check flag corresponding to this ID is set to be ON. At S13, whether no undetected RFID tag 14, that is, no RFID tag 14 whose check flag is OFF is present in the list stored in the memory portion 76 (whether all the check flags are ON) is determined. When this determination at S13 is denied, the processes at S11 and the later steps are again executed. However, when the determination at S13 is acknowledged, the routine comes to an end with this acknowledgment. In the above-indicated control, S3 and S11 correspond to the operation of the communication control portion 72.

According to this embodiment, the RFID tag communicating apparatus 12 includes a communication control portion 72 (S3 and S11) that selectively establishes a first communication mode of executing communication of information with all RFID tags 14 included in a list that defines a plurality of the RFID tags 14 that are predetermined handling the RFID tags 14 to be communicated or a second communication mode of executing communication of information with at least one of the RFID tags 14 corresponding to a designated piece of identification information handling the RFID tag 14 to be communicated; and a switching determining portion 71 (S10) that determines switching between the first communication mode and the second communication mode based on a predetermined parameter and a switching condition determined in advance. Therefore, the communication to check the presence of the plurality of RFID tags 14 listed in advance may be switched to the communication executed designating identification information corresponding to the advancement of the checking, so that the communication may efficiently be executed with unchecked RFID tags 14. It thus becomes possible to provide an RFID tag communicating apparatus 12 that may check as soon as possible the presence of the plurality of RFID tags 14 listed in advance.

The switching determining portion 71 is capable of selecting a switching condition and a parameter corresponding to a switching condition that is criterion for determining switching between the communication modes, from a plurality of switching conditions determined in advance. By configuring as above, the switching between the first communication mode and the second communication mode may be determined such that more efficient communication may be executed with unchecked RFID tags 14 by selectively using the plurality of criteria.

The parameter is the number of undetected RFID tags 14 of the RFID tags 14 included in the list, and wherein the switching condition for switching from the first communication mode to the second communication mode is that the number of undetected RFID tags 14 of the RFID tags 14 included in the list is smaller than a predetermined threshold value. By configuring as above, the switching between the first communication mode and the second communication mode may be determined based on the practical condition and the parameter.

The parameter is elapsed time from the start of the communication with the RFID tags 14, and wherein the switching condition for switching from the first communication mode to the second communication mode is that the elapsed time from the start of the communication with the RFID tags 14 is equal to or longer than a predetermined threshold value. By configuring as above, the switching between the first communication mode and the second communication mode may be determined based on the practical condition and the parameter.

The parameter is the total number of communication sessions with the RFID tags 14, and wherein the switching condition for switching from the first communication mode to the second communication mode is that the total number of communication sessions with the RFID tags 14 is equal to or larger than a predetermined threshold value. By configuring as above, the switching between the first communication mode and the second communication mode may be determined based on the practical condition and the parameter.

The parameter is the number of RFID tags 14 whose identification information pieces are readable with a predetermined command used one time in the communication with the RFID tags 14, and wherein the switching condition for switching from the first communication mode to the second communication mode is that the number of RFID tags 14 whose identification information pieces are readable with a predetermined command used one time in the communication with the RFID tags 14 is smaller than a predetermined threshold value. In the above, the predetermined command refers to a "Query" command in, for example, a C1G2 (Class 1 Generation 2) protocol that is standardized in EPCglobal. By configuring as above, the switching between the first communication mode and the second communication mode may be determined based on the practical condition and the parameter.

The RFID tag communicating apparatus further including a communication state determining portion 70 (S7) that determines a state of the communication with the RFID tags 14, wherein the switching determining portion 71 varies a threshold value in the switching condition corresponding to a state of the communication determined by the communication state determining portion 70. By configuring as above, the switching between the first communication mode and the second communication mode may be determined such that more efficient communication may be executed with unchecked RFID tags 14 by setting the threshold value corresponding to the state of the communication.

The switching determining portion 71 varies a threshold value for the number of undetected RFID tags 14 of the RFID tags 14 included in the list corresponding to the state of the communication determined by the communication state determining portion 70. By configuring as above, the switching between the first communication mode and the second communication mode may advantageously be determined by properly setting the threshold value under the practical switching condition.

The switching determining portion 71 varies the threshold value for the elapsed time from the start of the communication with the RFID tags 14 corresponding to the state of the communication determined by the communication state determining portion 70. By configuring as above, the switching between the first communication mode and the second communication mode may advantageously be determined by properly setting the threshold value under the practical switching condition.

The switching determining portion 71 varies the threshold value for the total number of communication sessions with the RFID tags 14 corresponding to the state of the communication determined by the communication state determining portion 70. By configuring as above, the switching between the first communication mode and the second communication mode may advantageously be determined by properly setting the threshold value under the practical switching condition.

The switching determining portion 71 varies the threshold value for the number of RFID tags 14 whose identification information pieces are readable with a predetermined command used one time in the communication with the RFID tags 14 corresponding to the state of the communication determined by the communication state determining portion 70. By configuring as above, the switching between the first communication mode and the second communication mode may advantageously be determined by properly setting the threshold value under the practical switching condition.

The communication state determining portion 70 determines the state of the communication with the RFID tags 14 based on magnitude of disturbance in the communication with the RFID tag 14. By configuring as above, the state of the communication with the RFID tags 14 may be determined in a practical form.

The communication state determining portion 70 determines the state of the communication with the RFID tags 14 based on a read error rate in the communication with the RFID tags 14. By configuring as above, the state of the communication with the RFID tags 14 may be determined in a practical form.

The communication state determining portion 70 determines the state of the communication with the RFID tags 14 based on the number of communication-successful slots, the number of empty slots, or the number of collision slots obtained in reading executed in the communication with the RFID tags 14. By configuring as above, the state of the communication with the RFID tags 14 may be determined in a practical form.

The RFID tag communicating apparatus 12 is a portable type apparatus 12 movably provided relative to a predetermined position. By configuring as above, for the portable-type RFID tag communicating apparatus that is preferably used in the communication to check the presence of the plurality of RFID tags 14 listed in advance, the communication to check as soon as possible the presence of the plurality of RFID tags 14 may be realized.

The RFID tag communicating apparatus 12 further including a built-in-type storing apparatus 76 having the list stored therein. By configuring as above, communication to check the presence of the plurality of RFID tags 14 included in the list may be executed in a practical form.

Another preferred embodiment of the present invention will be described in detail with reference to the accompanying drawings. The portions common to both of the embodiments will be given the same reference numerals and therefore will not again be described.

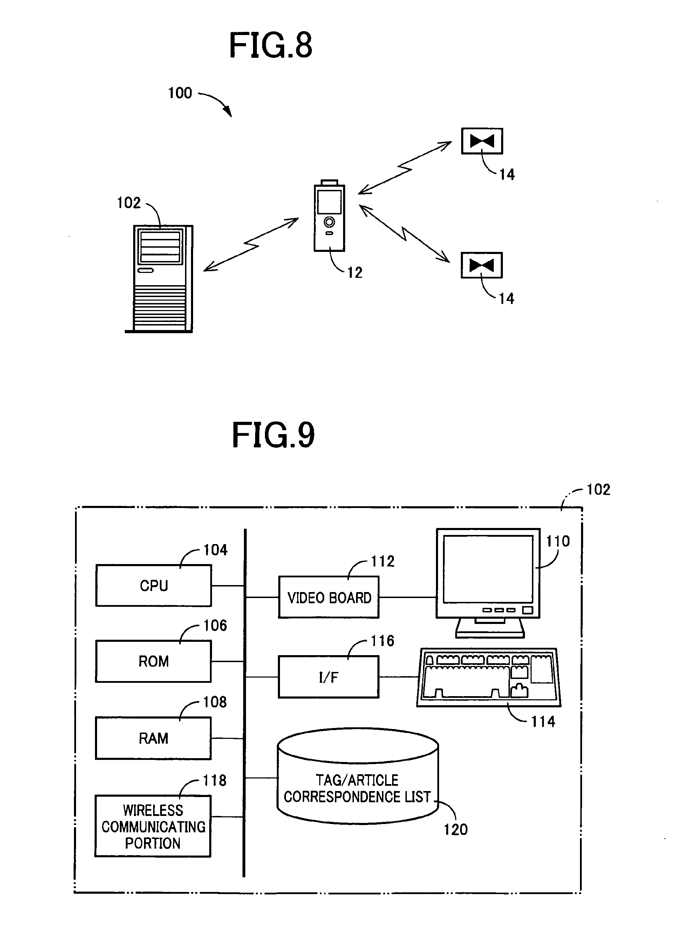

As depicted in Fig. 8, in addition to the RFID tag communicating apparatus 12 and the plurality of RFID tags 14, the RFID tag communication system 100 of the embodiment includes the server apparatus 102 that is capable of executing communication of information with the RFID tag communicating apparatus 12 and that has stored therein the list, and the RFID tag communication system 100 executes communication to check the presence of the plurality of RFID tags 14 included in the list using the RFID tag communicating apparatus 12.

As depicted in Fig. 9, the above-indicated server apparatus 102 is a so-called von-Neumann-type computer that executes, by using a CPU 104 that is a central processing portion, signal processing according to a program stored in advance in a ROM 106 that is a read-only memory using a temporary storage function of a RAM 108 that is a random access memory, and the server apparatus 102 is a server that executes various types of control including management of the RFID tags 14 by the RFID tag communication system 100 through the RFID tag communicating apparatus 12. As depicted in Fig. 9, the above-indicated server apparatus 102 includes a video image displaying apparatus 110 such as a CRT or a TFT, a video board 112 that is a video image display control apparatus to control display of a video image by the video image displaying apparatus 110, an input apparatus 114 such as a keyboard, an input interface 116 to process input by the input apparatus 114, and a wireless communicating portion 118 to execute communication of information by wireless with the RFID tag communicating apparatus 12, etc., that each include also a wireless LAN interface. The server apparatus 102 also includes a storing apparatus 120 that has stored therein a list that defines the plurality of predetermined RFID tags 14, that is, the tag list as depicted in Fig. 4 described above.

In the RFID tag communication system 100 configured as above, the RFID tag communicating apparatus 12 executes the above-indicated control by referring to the list stored in the storing apparatus 120 of the server apparatus 102. The RFID tag communicating apparatus 12 reads the IDs of the RFID tags 14 in the list stored in the storing apparatus 120 of the server apparatus 102 through the wireless LAN communicating portion 74 and controls the communication with the RFID tags 14 stored in the list handling these RFID tags 14 to be detected. Similar to the above-indicated embodiment, the RFID tag communicating apparatus 12 executes the above-indicated control to selectively establish the first communication mode executing communication of information with all the RFID tags 14 that are included in the list handling these RFID tags 14 to be communicated or a second communication mode executing communication of information with at least one of these RFID tags 14 that corresponds to a designated ID handling such RFID tag (s) 14 to be communicated, based on the result of the determination by the switching determining portion 71.

According to this embodiment, an RFID tag communication system 100 including the RFID tag communicating apparatus 12 of the first mode of the invention; and a server apparatus 102 having the list stored therein that is capable of executing communication of information with the RFID tag communicating apparatus 12, wherein the RFID tag communicating apparatus 12 executes communication to check presence of the plurality of RFID tags 14 included in the list. Therefore, the communication to check the presence of the plurality of RFID tags 14 listed in advance may be switched to the communication executed designating identification information corresponding to the advancement of the checking, so that the communication may efficiently be executed with unchecked RFID tags 14. It thus become possible the RFID tag communication system 100 that may check as soon as possible the presence of the plurality of RFID tags 14 listed in advance.

The preferred embodiments of the present invention have been described in detail with reference to the accompanying drawings. However, the present invention is not limited to the embodiments and is further implemented in other aspects.

For example, though the communication state determining portion 70, the switching determining portion 71, and the communication control portion 72 are all functionally included in the DSP 34 in the above-indicated embodiments, the present invention is not limited to this configuration and, for example, control apparatuses having control functions respectively equivalent to those of the communication state determining portion 70, the switching determining portion 71, and the communication control portion 72 may also be included separately from the DSP 34. The control operation executed by each of these control functions may either be executed using digital signal processing or analog signal processing.

The RFID tag communicating apparatus 12 that does not especially execute control of the directivity has been described in the above-indicated embodiments. However, preferably, the present invention is also applied to, for example, an RFID tag communication apparatus that is capable of controlling the directionality of communication with the RFID tags 14 using PAA (Phased Array Antenna) processing, an AAA (Adaptive Array Antenna) processing, etc.

An example of applying the present invention to the RFID tag communicating apparatus 12 that is a portable type apparatus movably provided relative to a predetermined position has been described in the above-indicated embodiments. However, preferably, the present invention is also applied to an RFID tag communicating apparatus as a stationary type apparatus provided being fixed relative to a predetermined position.

Though not individually exemplified, the present invention is implemented with various modifications made thereto within the scope not departing from the purport thereof.

## Claims

1. A radio frequncy identification (RFID) tag communicating apparatus that executes communication of information with an RFID tag by transmitting a transmission signal toward the RFID tag and receiving a return signal returned from the RFID tag in response to the transmission signal, comprising:
a communication control portion that selectively establishes a first communication mode of executing communication of information with all RFID tags included in a list that defines a plurality of the RFID tags that are predetermined handling the RFID tags to be communicated or a second communication mode of executing communication of information with at least one of the RFID tags corresponding to a designated piece of identification information handling the RFID tag to be communicated; and
a switching determining portion that determines switching between the first communication mode and the second communication mode based on a predetermined parameter and a switching condition determined in advance.

2. The RFID tag communicating apparatus of claim 1, wherein
the switching determining portion is capable of selecting a switching condition and a parameter corresponding to a switching condition that is criterion for determining switching between the communication modes, from a plurality of switching conditions determined in advance.

3. The RFID tag communicating apparatus of claim 2, wherein
the parameter is the number of undetected RFID tags of the RFID tags included in the list, and wherein
the switching condition for switching from the first communication mode to the second communication mode is that the number of undetected RFID tags of the RFID tags included in the list is smaller than a predetermined threshold value.

4. The RFID tag communicating apparatus of claim 2, wherein
the parameter is elapsed time from the start of the communication with the RFID tags, and wherein
the switching condition for switching from the first communication mode to the second communication mode is that the elapsed time from the start of the communication with the RFID tags is equal to or longer than a predetermined threshold value.

5. The RFID tag communicating apparatus of claim 2, wherein
the parameter is the total number of communication sessions with the RFID tags, and wherein
the switching condition for switching from the first communication mode to the second communication mode is that the total number of communication sessions with the RFID tags is equal to or larger than a predetermined threshold value.

6. The RFID tag communicating apparatus of claim 2, wherein
the parameter is the number of RFID tags whose identification information pieces are readable with a predetermined command used one time in the communication with the RFID tags, and wherein
the switching condition for switching from the first communication mode to the second communication mode is that the number of RFID tags whose identification information pieces are readable with a predetermined command used one time in the communication with the RFID tags is smaller than a predetermined threshold value.

7. The RFID tag communicating apparatus of any one of claims 3 to 6, further comprising
a communication state determining portion that determines a state of the communication with the RFID tags, wherein
the switching determining portion varies a threshold value in the switching condition corresponding to a state of the communication determined by the communication state determining portion.

8. The RFID tag communicating apparatus of claim 7, wherein
the switching determining portion varies a threshold value for the number of undetected RFID tags of the RFID tags included in the list corresponding to the state of the communication determined by the communication state determining portion.

9. The RFID tag communicating apparatus of claim 7, wherein
the switching determining portion varies the threshold value for the elapsed time from the start of the communication with the RFID tags corresponding to the state of the communication determined by the communication state determining portion.

10. The RFID tag communicating apparatus of claim 7, wherein
the switching determining portion varies the threshold value for the total number of communication sessions with the RFID tags corresponding to the state of the communication determined by the communication state determining portion.

11. The RFID tag communicating apparatus of claim 7, wherein
the switching determining portion varies the threshold value for the number of RFID tags whose identification information pieces are readable with a predetermined command used one time in the communication with the RFID tags corresponding to the state of the communication determined by the communication state determining portion.

12. The RFID tag communicating apparatus of any one of claims 7 to 11, wherein
the communication state determining portion determines the state of the communication with the RFID tags based on magnitude of disturbance in the communication with the RFID tag.

13. The RFID tag communicating apparatus of any one of claims 7 to 11, wherein
the communication state determining portion determines the state of the communication with the RFID tags based on a read error rate in the communication with the RFID tags.

14. The RFID tag communicating apparatus of any one of claims 7 to 11, wherein
the communication state determining portion determines the state of the communication with the RFID tags based on the number of communication-successful slots, the number of empty slots, or the number of collision slots obtained in reading executed in the communication with the RFID tags.

15. The RFID tag communicating apparatus of any one of claims 1 to 14, wherein
the RFID tag communicating apparatus is a portable type apparatus movably provided relative to a predetermined position.

16. The RFID tag communicating apparatus of any one of claims 1 to 15, further comprising:
a built-in-type storing apparatus having the list stored therein.

17. An RFID tag communication system comprising:
the RFID tag communicating apparatus of any one of claims 1 to 16; and
a server apparatus having the list stored therein that is capable of executing communication of information with the RFID tag communicating apparatus, wherein
the RFID tag communicating apparatus executes communication to check presence of the plurality of RFID tags included in the list.
